(19) Europäisches Patentamt / European Patent Office / Office européen des brevets

(11) **EP 4 542 675 A1**

(12) **EUROPEAN PATENT APPLICATION**
published in accordance with Art. 153(4) EPC

(43) Date of publication:
**23.04.2025  Bulletin 2025/17**

(21) Application number: **23903985.2**

(22) Date of filing: **13.12.2023**

(51) International Patent Classification (IPC):
$H01M\ 4/139^{(2010.01)}$    $H01M\ 4/04^{(2006.01)}$
$H01M\ 4/1395^{(2010.01)}$    $H01M\ 4/1391^{(2010.01)}$
$H01M\ 4/38^{(2006.01)}$    $H01M\ 4/48^{(2010.01)}$
$H01M\ 4/525^{(2010.01)}$    $H01M\ 4/58^{(2010.01)}$

(52) Cooperative Patent Classification (CPC):
**H01M 4/04; H01M 4/139; H01M 4/1391;
H01M 4/1395; H01M 4/38; H01M 4/48;
H01M 4/525; H01M 4/58; H01M 10/052;
Y02E 60/10**

(86) International application number:
**PCT/KR2023/020498**

(87) International publication number:
**WO 2024/128784 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.12.2022  KR 20220175729**

(71) Applicant: **LG Energy Solution, Ltd.
Seoul 07335 (KR)**

(72) Inventors:
• **LEE, Ilha
  Daejeon 34122 (KR)**
• **JEON, Seoyoung
  Daejeon 34122 (KR)**
• **JOO, Mun Kyu
  Daejeon 34122 (KR)**
• **KIM, Sarah
  Daejeon 34122 (KR)**
• **KWON, Yohan
  Daejeon 34122 (KR)**
• **CHAE, Jonghyun
  Daejeon 34122 (KR)**

(74) Representative: **Hoffmann Eitle
Patent- und Rechtsanwälte PartmbB
Arabellastraße 30
81925 München (DE)**

(54) **METHOD FOR MANUFACTURING ELECTRODE FOR LITHIUM SECONDARY BATTERY, TRANSFER STACK, AND LITHIUM SECONDARY BATTERY COMPRISING ELECTRODE**

(57)  The present application relates to a method for manufacturing an electrode for a lithium secondary battery, an electrode intermediate, and a lithium secondary battery including an electrode.

[Figure 1]

EP 4 542 675 A1

**Description**

[Technical Field]

This application claims priority to and the benefit of Korean Patent Application No. 10-2022-0175729 filed in the Korean Intellectual Property Office on December 15, 2022, the entire contents of which are incorporated herein by reference.

The present application relates to a method for manufacturing an electrode for a lithium secondary battery, a transfer laminate, and a lithium secondary battery including an electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions coming out from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, when a silicon-based negative electrode active material is used, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problems, known is a method for pre-lithiating a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In addition, in a lithium metal transfer process of the pre-lithiation process, it is difficult to transfer lithium metal safely and easily, and lithium is not transferred from a transfer laminate, or even if lithium metal is transferred, the highly reactive lithium metal immediately starts reacting with an electrode active material, thereby causing problems such as particle breakage on a surface of an electrode active material layer.

Therefore, it is necessary to research a process condition and a material with which it is possible to easily transfer lithium metal on top of an electrode active material layer during a lithium metal transfer process, and to uniformly pre-lithiate lithium in the electrode active material layer in a more safe and efficient manner when pre-lithiating an electrode.

Prior Art Document

(Patent Literature 1) Japanese Patent Application Publication No. 2009-080971

[Detailed Description of the Invention]

[Technical Problem]

In the pre-lithiation process, the lithium metal transfer process includes a process of transferring a lithium metal layer from the transfer laminate on top of the electrode active material layer. In this case, it was found through research that when the lithium metal layer is formed with a transfer start portion in order to easily transfer the lithium metal layer from the transfer laminate to the top of the electrode active material layer, the transfer can be facilitated. Accordingly, the present application relates to a method for manufacturing an electrode for a lithium secondary battery, a transfer laminate, and a lithium secondary battery including an electrode.

[Technical Solution]

An exemplary embodiment of the present specification provides a method for manufacturing an electrode for a lithium secondary battery, the method including: forming an electrode current collector layer and an electrode active material layer on one surface or both surfaces of the electrode current collector layer; preparing a transfer laminate in which a base material film, a transfer force enhancing layer, and a lithium metal layer are sequentially stacked; forming a transfer start portion by removing the lithium metal layer in a transverse direction (TD); transferring the lithium metal layer having the transfer start portion formed thereon, on top of the electrode active material layer; and removing the base material film.

Another exemplary embodiment provides a transfer laminate including: a base material film; a transfer force enhancing layer formed on one surface of the base material film; and a lithium metal layer formed on a surface of the transfer force enhancing layer opposite to a surface in contact with the base material film, in which the lithium metal layer includes a lithium metal non-deposited portion.

Still another exemplary embodiment of the present application provides a lithium secondary battery including a positive electrode for a lithium secondary battery; a negative electrode for a lithium secondary battery; a separator provided between the positive electrode and the negative electrode; and an electrolyte, in which at least one of the positive electrode for a lithium secondary battery and the negative electrode for a lithium secondary battery is the electrode for a lithium secondary battery manufactured according to the method of the present application.

[Advantageous Effects]

The method for manufacturing an electrode for a lithium secondary battery according to an exemplary embodiment of the present invention uses a transfer process of lithium metal, and specifically, includes the transfer start portion for enabling a lithium metal layer to be transferred on top of the electrode active material layer more easily, thereby making it possible to implement excellent surface uniformity and to suppress generation of by-products.

That is, in an exemplary embodiment of the present application, after preparing a transfer laminate in which a base material film, a transfer force enhancing layer, and a lithium metal layer are sequentially stacked, the lithium metal layer is removed in a transverse direction (TD) to form a transfer start portion, whereby a transfer start portion obtained by removing the lithium metal layer is included. When the transfer start portion is included, transferability onto the electrode active material layer can be improved even if a transfer speed is high, and the base material film can be immediately peeled from the transfer laminate. Accordingly, heat generated during pre-lithiation is smoothly dissipated, so that generation of by-products can be suppressed, as compared with a case where the base material film is maintained laminated during pre-lithiation.

[Brief Description of Drawings]

FIG. 1 shows a process of transferring lithium metal to an electrode for a lithium secondary battery according to an exemplary embodiment of the present application.
FIG. 2 shows an experiment result according to Example 1 of the present application.
FIG. 3 shows an experiment result according to Comparative Example 1 of the present application.

<Explanation of Reference Numerals and Symbols>

10: base material film
20: lithium metal layer
30: electrode active material layer
35: transfer force enhancing layer
40: electrode current collector layer
100: transfer laminate
200: electrode for lithium secondary battery
300: transfer start portion

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a method for manufacturing an electrode for a lithium secondary battery, the method including: forming an electrode current collector layer and an electrode active material layer on one surface or both surfaces of the electrode current collector layer; preparing a transfer laminate in which a base material film, a transfer force enhancing layer, and a lithium metal layer are sequentially stacked; forming a transfer start portion by removing the lithium metal layer in a transverse direction (TD); transferring the lithium metal layer having the transfer start portion formed thereon, on top of the electrode active material layer; and removing the base material film.

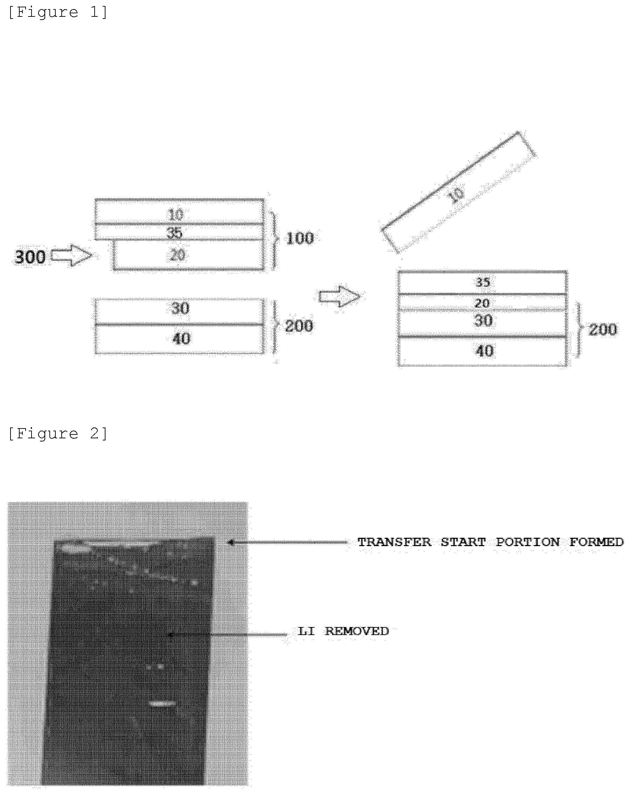

FIG. 1 is a view showing a structure and a transfer process of a transfer laminate in a method for manufacturing an electrode for a lithium secondary battery according to the present application.

In an exemplary embodiment of the present application, removing the lithium metal layer in the transverse direction (TD) may mean forming a transfer start portion in a direction perpendicular to a machine direction (MD) in a ROLL to ROLL process.

That is, a base material film 10, a transfer force enhancing layer 35, and a lithium metal layer 20 can be continuously stacked to form a transfer laminate by the R2R process, and in this case, a direction in which the R2R process progresses can be defined as the machine direction (MD) and a vertical direction of the direction in which the process progresses can be defined as the transverse direction (TD). In this case, the lithium metal layer may be removed in the transverse direction (TD) to form a transfer start portion 300.

Ultimately, in the transfer laminate, the machine direction (MD) may refer to a width of the transfer laminate, and the transverse direction (TD) may refer to a length of the transfer laminate.

In an exemplary embodiment of the present application, the electrode may be a negative electrode or a positive electrode.

The method for manufacturing an electrode for a lithium secondary battery according to an exemplary embodiment of the present invention uses a transfer process of lithium metal, and specifically, relates to a pre-lithiation method of an electrode for a lithium secondary battery that satisfies conditions for enabling a lithium metal layer to be transferred on top of an electrode active material layer more easily, thereby making it possible to implement excellent surface uniformity and to suppress generation of by-products.

FIG. 1 is a view showing a process of transferring a lithium metal layer to an electrode for a lithium secondary battery according to an exemplary embodiment of the present application. Specifically, processes of stacking a transfer laminate 100, in which a base material film 10, a transfer force enhancing layer 35, and a lithium metal layer 20 are sequentially stacked, onto an electrode 200 for a lithium secondary battery formed by an electrode current collector layer 40 and an electrode active material layer 30, and then removing the base material film 10 of the transfer laminate 100 can be seen. In this case, it can be confirmed that a transfer start portion (lithium non-deposited portion, 300) is included.

That is, the problems related to transfer force, such as reverse transfer in the transfer process of a lithium metal layer of the related art, are addressed by forming the transfer start portion as described above.

Hereinafter, specific details of the method of manufacturing an electrode for a lithium secondary battery of the present invention will be described.

The method for manufacturing an electrode for a lithium secondary battery according to an exemplary embodiment of the present application may include a step of forming an electrode current collector layer and an electrode active material layer on one surface or both surfaces of the electrode current collector layer.

In an exemplary embodiment of the present application, there is provided the method for manufacturing an electrode for a lithium secondary battery in which the step of forming the electrode current collector layer and the electrode active material layer on one surface or both surfaces of the electrode current collector layer includes a step of coating an electrode slurry including an electrode active material layer composition on one surface or both surfaces of the electrode current collector layer, and in which the electrode active material layer composition includes one or more selected from the group consisting of an electrode active material, an electrode conductive material, and an electrode binder.

In this case, there is provided the method for manufacturing an electrode for a lithium secondary battery in which the electrode active material includes a silicon-based active material, and the silicon-based active material includes one or more selected from the group consisting of SiOx (x=0), SiOx (0<x<2), SiC, and a Si alloy.

In an exemplary embodiment of the present application, the electrode may be a negative electrode, and hereinafter, the method for manufacturing a negative electrode for a lithium secondary battery will be described.

The method of manufacturing an electrode for a lithium secondary battery according to an exemplary embodiment of the present application may include a step of forming a negative electrode current collector layer and a negative electrode active material layer on one surface or both surfaces of the negative electrode current collector layer.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 $\mu$m or greater and 100 $\mu$m or less, and a thickness of the negative electrode active material layer may be 20 $\mu$m or greater and 500 $\mu$m or less.

However, the thickness may be variously modified depending on a type and a use of negative electrode used, and is not limited thereto.

In an exemplary embodiment of the present application, there is provided the method of manufacturing an electrode for a lithium secondary battery in which the step of forming the negative electrode current collector layer and the negative electrode active material layer on one surface or both surfaces of the negative electrode current collector layer includes a step of coating a negative electrode slurry including a negative electrode active material layer composition on one surface or both surfaces of the negative electrode current collector layer, and in which the negative electrode active material layer composition includes one or more selected from the group consisting of a negative electrode active material, a negative electrode conductive material, and a negative electrode binder.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry satisfies the above range, the viscosity is appropriate during formation of the negative electrode active material layer, so that particle agglomeration of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a negative electrode active material, a negative electrode conductive material, and a negative electrode binder.

In an exemplary embodiment of the present application, a silicon-based active material may be used as the negative electrode active material, or a negative electrode including both a silicon-based active material and a carbon-based active material may be used. In this case, a lithium secondary battery with further improved overall performance, such as cycle life characteristics, can be manufactured.

In an exemplary embodiment of the present application, the silicon-based active material may include one or more selected from the group consisting of Si particles, SiOx (0<x<2), SiC, and a Si alloy.

In an exemplary embodiment of the present application, the silicon-based active material may include one or more selected from the group consisting of SiOx (x=0) and SiOx (0<x<2), and may include the SiOx (x=0) in an amount of 70 parts by weight or more based on 100 parts by weight of the silicon-based active material.

In another exemplary embodiment, SiOx (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles (SiOx (x=0)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, resulting in an increase in initial irreversible capacity. When the initial irreversible capacity increases, there occurs a problem that the battery capacity and the cycle are rapidly reduced.

In the present invention, in order to solve the above problems, the negative electrode of the lithium secondary battery is pre-lithiated to address the initial irreversible capacity problem. Specifically, in the pre-lithiation process, during the lithium transfer process, a lithium metal layer can be easily transferred from a transfer laminate, and generation of by-products is suppressed so that lithium in the negative electrode active material layer can be uniformly pre-lithiated.

Note that an average particle diameter (D50) of the silicon-based active material of the present invention may be 5 μm to 10 μm, specifically 5.5 μm to 8 μm, and more specifically 6 μm to 7 μm. When the average particle diameter is within the above range, a specific surface area of the particles is within a suitable range, so that the viscosity of the negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, resulting in an increase in the capacity retention rate. Note that, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET surface area. The BET surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application includes both a negative electrode conductive material and a negative electrode binder capable of controlling the volume expansion rate during charging and discharging even when the silicon-based active material having a significantly high capacity is used within the above range. Accordingly, even when the silicon-based active material is included within the above range, the negative electrode active material layer composition does not degrade performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation A below, in which A is an area and P is a boundary line.

[Equation A]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of negative electrode conductive material that is used together with the silicon-based active material is important.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used so as to improve conductivity of the negative electrode and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 μm to 7 μm, specifically 3 μm to 6 μm, and more specifically 4 μm to 5 μm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode active material layer composition in which the planar conductive material has D10 of 0.5 μm or greater and 1.5 μm or less, D50 of 2.5 μm or greater and 3.5 μm or less, and D90 of 7.0 μm or greater and 15.0 μm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m²/g or greater.

In another exemplary embodiment, the planar conductive material may have a BET specific surface area of 5 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 5 m²/g or greater and 40 m²/g or less, preferably 5 m²/g or greater and 30 m²/g or less, and more preferably 5 m²/g or greater and 25 m²/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term "bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less based on 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure when the volume of the silicon-based active material expands and relaxes. When such roles are satisfied, all of the general negative electrode binders can be applied. Specifically, a water-based binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 1 part by weight or more, and 3 parts by weight or more based on 100 parts by weight of the negative electrode active material layer composition.

In an exemplary embodiment of the present application, the electrode may be a positive electrode, and hereinafter, the method of manufacturing a positive electrode for a lithium secondary battery will be described. In this case, the same description as the above-described method of manufacturing a negative electrode for a lithium secondary battery may be applied, except the positive electrode.

The method of manufacturing an electrode for a lithium secondary battery according to an exemplary embodiment of the present application may include a step of forming a positive electrode current collector layer and a positive electrode active material layer on one surface or both surfaces of the positive electrode current collector layer.

In an exemplary embodiment of the present application, the positive electrode current collector layer is not particularly limited as long as it has conductivity without causing a chemical change in a battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the positive electrode current collector layer may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The thickness of the positive electrode current collector layer may be variously modified depending on a type and a use of the negative electrode used, and is not limited thereto.

In an exemplary embodiment of the present application, there is provided the method of manufacturing an electrode for a lithium secondary battery in which the step of forming the positive electrode current collector layer and the positive electrode active material layer on one surface or both surfaces of the positive electrode current collector layer includes a step of coating a positive electrode slurry including a positive electrode active material layer composition on one surface or both surfaces of the positive electrode current collector layer, and in which the positive electrode active material layer composition includes one or more selected from the group consisting of a positive electrode active material, a positive electrode conductive material, and a positive electrode binder.

In an exemplary embodiment of the present application, the above description of the negative electrode slurry may be similarly applied to the positive electrode slurry, except the positive electrode.

In an exemplary embodiment of the present application, the positive electrode active material layer composition may include one or more selected from the group consisting of a positive electrode active material, a positive electrode conductive material, and a positive electrode binder.

The positive electrode active material may be a positive electrode active material that is typically used. Specifically, the positive electrode active material may be a layered compound such as a lithium cobalt oxide (Li-$CoO_2$) and a lithium nickel oxide (LiNiO$_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $CU_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

In an exemplary embodiment of the present application, there is provided the method for manufacturing an electrode for a lithium secondary battery in which the electrode active material includes a positive electrode active material and the positive electrode active material includes one or more selected from the group consisting of Ni, Co, Mn, LTO, LFP, $RuO_2$, $Nb_2O_5$, $Mn_3O_4$, $Fe_2O_3$, and $Co_3O_4$.

The positive electrode may include a sacrificial positive electrode material, and regarding the type thereof, one used in the art may be used without limitation.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In addition, the above description of the negative electrode active material layer composition may be likewise applied to the contents of the positive electrode active material, the positive electrode conductive material, and the positive electrode binder included in the positive electrode active material layer composition.

In general, the pre-lithiation process chemically or physically pre-lithiates a lithium metal layer into an electrode, and specifically, may be carried out by a lithium metal transfer process, lithium metal powder deposition, an electrochemical process, or a lithium metal deposition process, and the pre-lithiation process according to the present application may include a lithium metal transfer process.

The lithium metal layer transfer process has a feature capable of transferring highly reactive lithium metal on top of the electrode active material layer more stably. In this case, a process capable of easily transferring a lithium metal layer from the transfer laminate on top of the electrode active material layer is required.

An exemplary embodiment of the present application includes preparing a transfer laminate in which a base material film, a transfer force enhancing layer, and a lithium metal layer are sequentially stacked; transferring the lithium metal layer having the transfer start portion formed thereon, on top of the electrode active material layer; and removing the base material film.

In this case, forming a transfer start portion by removing the lithium metal layer in the transverse direction (TD) includes removing the lithium metal layer using a tape or knife after preparing the transfer laminate in which a base material film, a transfer force enhancing layer, and a lithium metal layer are sequentially stacked.

Specifically, the transfer start portion may be formed as a line by removing the lithium metal layer in the transverse direction (TD) using a knife for the lithium metal layer, and in this case, a width of the transfer start portion may be 30 μm or greater.

In another exemplary embodiment, the width of the transfer start portion may be 30 μm or greater, preferably the width of the transfer start portion may be 35 μm or greater, and more preferably 40 μm or greater, and 100 μm or less, preferably 90 μm or less, and more preferably 80 μm or less.

When the transfer start portion is formed to have the width as described above, transferability onto the electrode active material layer can be improved even if a transfer speed is high, and the base material film can be immediately peeled from the transfer laminate. Accordingly, heat generated during pre-lithiation is smoothly dissipated, so that generation of by-products can be suppressed, as compared with a case where the base material film is maintained laminated during pre-lithiation.

In an exemplary embodiment of the present application, the transfer start portion may include one or more line shapes.

In an exemplary embodiment of the present application, after forming the lithium metal layer, the lithium metal layer is first removed from a portion where transfer begins, thereby forming a transfer start portion, and the form of the transfer start portion is not limited.

In an exemplary embodiment of the present application, the deposition method for depositing the lithium metal layer onto the base material film having the transfer force enhancing layer formed thereon may be selected from evaporation deposition, chemical vapor deposition (CVD), and physical vapor deposition, but is not limited thereto, and various deposition methods that are used in the art may be used.

In this case, a lamination process may be performed by roll pressing the electrode for a lithium secondary battery on which the transfer laminate is stacked by applying a load of 5 kgf/cm$^2$ to 500 kgf/cm$^2$. Thereafter, a process of removing the base material film is included.

In an exemplary embodiment of the present application, any base material film can be used without limitation as long as it has features capable of withstanding process conditions such as high temperature in the step of depositing the lithium metal, and preventing a reverse peeling problem that lithium metal is transferred onto the base material film during a winding process for transferring the deposited lithium metal.

Specifically, in an exemplary embodiment of the present application, the base material film may be one or more selected from the group consisting of polyethylene terephthalate (PET), polyimide (PI), poly(methylmethacrylate) (PMMA), polypropylene, polyethylene and polycarbonate.

In an exemplary embodiment of the present application, a thickness of the base material film may be 1 μm or greater and 300 μm or less, and may satisfy a range of 5 μm or greater and 200 μm or less or 10 μm or greater and 100 μm or less.

In an exemplary embodiment of the present application, a thickness of the lithium metal layer may be 1 μm or greater and 10 μm or less, and may preferably satisfy a range of 3 μm or greater and 10 μm or less.

When the thicknesses of the base material film and the lithium metal layer satisfy the above ranges, the transfer of the lithium metal layer to the electrode active material layer can occur efficiently and the reverse transfer can be prevented.

In an exemplary embodiment of the present application, there is provided the method for manufacturing an electrode for a lithium secondary battery in which the transfer force enhancing layer is included on a surface in contact with the base material film and the lithium metal layer of the transfer laminate, in order to improve the peelability of the lithium metal layer, to secure transferability to the electrode active material layer, and to serve as a protection layer after transfer of the lithium metal layer.

That is, the base material film may have a transfer force enhancing layer formed on at least one surface thereof, or may have transfer force enhancing layers formed on both surfaces thereof. The transfer force enhancing layer makes it possible to prevent a reverse peeling problem that the lithium metal layer is transferred onto the base material film during a winding process for transferring the deposited lithium metal layer to an electrode, and also makes it possible to easily separate the base material film after the lithium metal layer is transferred onto the electrode active material layer.

The transfer force enhancing layer may include one or more species selected from the group consisting of silicon-modified polyester in which a silicon chain is graft-linked to a polyester main chain, an acrylic resin, Si, melamine, and fluorine.

In an exemplary embodiment of the present application, the transfer force enhancing layer may include polymethyl methacrylate (PMMA).

In an exemplary embodiment of the present application, the transfer force enhancing layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, there is provided laminating the transfer laminate onto the electrode active material layer so that a surface of the lithium metal layer opposite to a surface in contact with the transfer force enhancing layer comes into contact with a surface of the electrode active material layer opposite to a surface in contact with the electrode current collector layer.

In this case, the laminating may be performed under a temperature condition of 20°C to 90°C and a pressurization condition of 5 kgf/cm$^2$ to 500 kgf/cm$^2$.

In an exemplary embodiment of the present application, the laminating may satisfy a pressurization condition of 5 kgf/cm$^2$ to 500 kgf/cm$^2$, and preferably 10 kgf/cm$^2$ to 150 kgf/cm$^2$.

However, the temperature condition may be omitted in the laminating. In particular, when the laminating satisfies the pressurization condition described above, the rate of pre-lithiation of the lithium metal layer can be smoothly controlled, and accordingly, generation of a large amount of oxides and nitrides during the transfer process can be suppressed. In addition, as the pressurization range is satisfied, the lithium metal is smoothly transferred on top of the electrode active material layer, so that the problem of reverse transfer does not also occur.

After the laminating, pre-lithiation of the highly reactive lithium metal and the electrode active material layer may progress, or the reaction may not progress and pre-lithiation may progress during assembling of a battery.

In an exemplary embodiment of the present application, there is provided the method for manufacturing an electrode for a lithium secondary battery including pre-lithiating the electrode active material layer after removing the base material film, in which in the pre-lithiating of the electrode active material layer, the electrode active material layer is pre-lithiated within 30 minutes to 7 days after transferring the lithium metal.

In the transfer process of a lithium metal layer of the related art, there is a problem in that it is difficult to peel off the base material film during the progression of pre-lithiation after laminating the transfer laminate. Accordingly, the pre-lithiation progresses without the base material film being removed, and the heat generated during pre-lithiation is blocked by the base material film and is not thus dissipated, resulting in formation of by-products on the surface during pre-lithiation of lithium metal. In the pre-lithiation method of an electrode for a lithium secondary battery according to the present application, the transfer start portion as described above is formed, so the base material film can be easily peeled off immediately after laminating the transfer laminate, suppressing the generation of by-products during pre-lithiation.

In an exemplary embodiment of the present application, the transfer force enhancing layer and the lithium metal are transferred together on top of the electrode active material layer, rather than the lithium metal layer being transferred solely. In this case, the transfer force enhancing layer can also serve as a protection layer capable of preventing a reaction of the highly reactive lithium metal layer in the air.

In an exemplary embodiment of the present application, pre-lithiating the electrode active material layer may be included.

There is provided the method for manufacturing an electrode for a lithium secondary battery in which in the pre-lithiating of the electrode active material layer, the electrode active material layer is pre-lithiated within 30 minutes to 24 hours under conditions of 25°C and 1 atm.

The pre-lithiation step is a step of setting a condition for diffusing lithium metal into the electrode active material layer, and whether the pre-lithiation is completed can be determined depending on whether lithium on top of the electrode active material layer has completely disappeared.

In an exemplary embodiment of the present application, the activation reaction time may be 30 minutes to 7 days, and preferably 1 hour to 6 hours.

An exemplary embodiment of the present application provides a transfer laminate including: a base material film; a transfer force enhancing layer formed on one surface of the base material film; and a lithium metal layer formed on a surface of the transfer force enhancing layer opposite to a surface in contact with the base material film, in which the lithium metal layer includes a lithium metal non-deposited portion.

In an exemplary embodiment of the present application, there is provided the transfer laminate in which a width of the lithium metal non-deposited portion is 30 $\mu$m or greater. In this case, the non-deposited portion may have the same meaning as the above-described transfer start portion.

In the transfer laminate, the above descriptions may be applied to each configuration.

An exemplary embodiment of the present application provides a lithium secondary battery including: a positive electrode for a lithium secondary battery; a negative electrode for a lithium secondary battery; a separator provided between the positive electrode and the negative electrode; and an electrolyte, in which at least one of the positive electrode for a lithium secondary battery and the negative electrode for a lithium secondary battery is the electrode for a lithium secondary battery manufactured according to the method of the present application.

In this case, the transfer force enhancing layer 35 used during pre-lithiation may be removed as described above, and accordingly, does not remain on top of the electrode, thereby preventing an unnecessary increase in resistance. That is, the transfer force enhancing layer improves the transfer force, can be used to protect the lithium metal layer before pre-lithiation, and can be removed before injection of the electrolyte solution.

In an exemplary embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

An exemplary embodiment of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Preparation of Transfer Laminate>**

**<Example 1>**

A release layer capable of improving transfer force was coated on top of a PET layer. Then, lithium metal was deposited in a thickness level of 6 μm to form a lithium metal layer on top of the PET base material by using a PVD method, so that a transfer laminate was prepared.

In this case, a transfer start portion (line) of about 40 μm in size was formed at an upper end portion of the transfer laminate by using a knife. The transfer start portion was in a state in which only a Li portion of the PET film on which lithium was deposited was removed.

**<Example 2>**

A transfer laminate was prepared in the same manner as in Example 1, except that a transfer start portion (line) of about 60 μm in size was formed at the upper end portion of the transfer laminate by using a knife in Example 1.

**<Example 3>**

A transfer laminate was prepared in the same manner as in Example 1, except that a transfer start portion (line) of about 120 μm in size was formed at the upper end portion of the transfer laminate by using a knife in Example 1.

**<Comparative Example 1>**

A release layer capable of improving transfer force was coated on top of a PET layer. Then, lithium metal was deposited in a thickness level of 6 μm to form a lithium metal layer on top of the PET base material by using a PVD method, so that a transfer laminate was prepared.

That is, the transfer laminate was formed in the same manner as in Example 1, except that the transfer start portion as in Example 1 was not formed.

**<Preparation of Negative Electrode>**

Si (average particle diameter (D50): 3.5 μm) serving as a silicon-based active material, Denka black serving as a conductive material, SBR serving as a binder, and CMC serving as a thickener were added to distilled water serving as a solvent for forming a negative electrode slurry at a weight ratio of 80:15.8:3:1.2 to prepare a negative electrode slurry (solid concentration: 25 wt.%).

As a mixing method, the conductive material, the binder, the thickener, and the water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 15 μm) serving as a negative electrode current collector with a loading amount of 85 mg/25 cm², which was then roll-pressed and dried in a vacuum oven at 130°C for 10 hours to form a negative electrode active material layer (thickness: 33 μm), whereby a negative electrode was prepared (thickness of negative electrode: 41 μm, porosity of negative electrode: 40.0%).

Then, in order to transfer the transfer laminate to the negative electrode active material layer, the lithium metal of the transfer laminate was placed on top of the negative electrode active material layer, which was then subjected to roll-pressing while applying an external pressurization condition to join the lithium metal and the negative electrode active material layer. Immediately after lamination, the PET layer of the transfer laminate was removed, and the negative electrode was pre-lithiated.

In the present application, for the experiments of Examples 1 to 3 and Comparative Example 1, Nitto 31b tape was applied to the entire top of the lithium metal layer and then removed to confirm the effect. That is, transferability during the pre-lithiation process on the electrode was confirmed using Nitto 31b tape as above.

FIG. 2 shows a case in which the transfer laminate according to Example 1 of the present application was transferred to a Nitto 31b tape. Specifically, in the case of Example 1 in which the transfer start portion was formed, it could be confirmed that the entire Li metal layer was transferred onto the Nitto 31b tape, and specifically, that the lithium metal with the transfer start portion was intactly transferred.

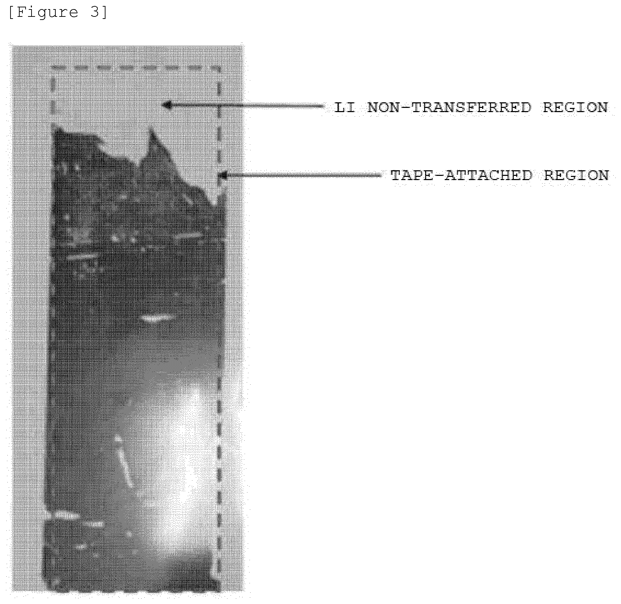

On the other hand, FIG. 3 shows a case in which the transfer laminate according to Comparative Example 1 of the present application was transferred to a Nitto 31b tape. Specifically, in the case of Comparative Example 1 in which a transfer start portion was not formed, it could be confirmed that the Li metal layer was not intactly transferred onto the Nitto 31b tape, and the Li metal came off from the middle portion.

From the results as described above, it could be confirmed that in the case of the transfer laminate of Examples 1 to 3 according to the present application, the lithium metal layer can be easily transferred on top of the electrode active material layer due to the transfer start portion during transfer onto the electrode active material layer, and accordingly, the problem of by-products on the electrode active material layer could be solved. In Comparative Example 1 in which the transfer start portion was not formed, which corresponds to a case where lithium metal is non-uniformly transferred on top of the electrode active material layer, it could be confirmed that the reaction did not occur constantly, and by-products were formed on top of the electrode active material layer, increasing the battery resistance.

For reference, it can be seen that in the case of Example 3, the transfer start portion was 120 μm in size, which was larger than those of Examples 1 and 2. If the transfer start portion is too small, some effectiveness may be reduced, and if the transfer start portion is formed large as in Example 3, the consumption of lithium is greater than in Examples 1 and 2, and problems of disposal may occur accordingly. However, even in this case, it could be confirmed that the lithium metal layer was intactly transferred compared to Comparative Example 1.

## Claims

1. A method for manufacturing an electrode for a lithium secondary battery, the method comprising:

   forming an electrode current collector layer and an electrode active material layer on one surface or both surfaces of the electrode current collector layer;
   preparing a transfer laminate in which a base material film, a transfer force enhancing layer, and a lithium metal layer are sequentially stacked;
   forming a transfer start portion by removing the lithium metal layer in a transverse direction (TD);
   transferring the lithium metal layer having the transfer start portion formed thereon, on top of the electrode active material layer; and
   removing the base material film.

2. The method of claim 1, wherein the transfer start portion has a width of 30 μm or greater.

3. The method of claim 1, wherein the lithium metal layer has a thickness of 1 μm or greater and 10 μm or less.

4. The method of claim 1, wherein the transfer force enhancing layer comprises one or more species selected from the group consisting of silicon-modified polyester in which a silicon chain is graft-linked to a polyester main chain, an acrylic resin, Si, melamine, and fluorine.

5. The method of claim 1, comprising pre-lithiating the electrode active material layer after removing the base material film,
   wherein in the pre-lithiating of the electrode active material layer, the electrode active material layer is pre-lithiated within 30 minutes to 7 days after transferring the lithium metal layer.

6. The method of claim 1, wherein the forming of the electrode current collector layer and the electrode active material layer on one surface or both surfaces of the electrode current collector layer comprises coating an electrode slurry comprising an electrode active material layer composition on one surface or both surfaces of the electrode current collector layer, and

wherein the electrode active material layer composition comprises one or more selected from the group consisting of an electrode active material, an electrode conductive material, and an electrode binder.

7. The method of claim 6, wherein the electrode active material comprises a silicon-based active material, and

wherein the silicon-based active material comprises one or more selected from the group consisting of SiOx (x=0), SiOx (0<x<2), SiC, and a Si alloy.

8. The method of claim 6, wherein the electrode active material comprises a positive electrode active material, and

wherein the positive electrode active material comprises one or more selected from the group consisting of Ni, Co, Mn, LTO, LFP, $RuO_2$, $Nb_2O_5$, $Mn_3O_4$, $Fe_2O_3$, and $Co_3O_4$.

9. The method of claim 1, wherein the forming a transfer start portion by removing the lithium metal layer in the transverse direction (TD) comprises removing the lithium metal layer using a tape or knife after preparing the transfer laminate in which a base material film, a transfer force enhancing layer, and a lithium metal layer are sequentially stacked.

10. The method of claim 1, wherein the transfer start portion comprises one or more line shapes.

11. A transfer laminate comprising:

a base material film;
a transfer force enhancing layer formed on one surface of the base material film; and
a lithium metal layer formed on a surface the transfer force enhancing layer opposite to a surface of in contact with the base material film,
wherein the lithium metal layer comprises a lithium metal non-deposited portion.

12. The transfer laminate of claim 11, wherein the lithium metal non-deposited portion has a width of 30 $\mu$m or greater.

13. A lithium secondary battery comprising:

a positive electrode for a lithium secondary battery;
a negative electrode for a lithium secondary battery;
a separator provided between the positive electrode and the negative electrode; and
an electrolyte,
wherein at least one of the positive electrode for the lithium secondary battery and the negative electrode for the lithium secondary battery is an electrode for a lithium secondary battery manufactured according to the method of any one of claims 1 to 10.

[Figure 1]

[Figure 2]

TRANSFER START PORTION FORMED

LI REMOVED

[Figure 3]

LI NON-TRANSFERRED REGION

TAPE-ATTACHED REGION

<div style="text-align:center">**INTERNATIONAL SEARCH REPORT**</div>

| International application No. |
|---|
| **PCT/KR2023/020498** |

| A. | CLASSIFICATION OF SUBJECT MATTER |
|---|---|

**H01M 4/139**(2010.01)i; **H01M 4/04**(2006.01)i; **H01M 4/1395**(2010.01)i; **H01M 4/1391**(2010.01)i; **H01M 4/38**(2006.01)i; **H01M 4/48**(2010.01)i; **H01M 4/525**(2010.01)i; **H01M 4/58**(2010.01)i

According to International Patent Classification (IPC) or to both national classification and IPC

| B. | FIELDS SEARCHED |
|---|---|

Minimum documentation searched (classification system followed by classification symbols)

H01M 4/139(2010.01); B32B 27/32(2006.01); C09J 123/26(2006.01); C23C 14/14(2006.01); H01M 10/052(2010.01); H01M 4/134(2010.01); H01M 4/1395(2010.01); H01M 4/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 리튬금속층(lithium metal layer), 전사 (transfer), 칼(knife), 미증착부(non-deposited portion), 제거(elimination)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2021-0029459 A (LG CHEM, LTD.) 16 March 2021 (2021-03-16)<br>See claims 1 and 8; and paragraphs [0005] and [0081]. | 1-13 |
| A | JP 2020-187975 A (ULVAC JAPAN LTD.) 19 November 2020 (2020-11-19)<br>See entire document. | 1-13 |
| A | JP 6574122 B2 (TORAY ADVANCED FILM CO., LTD.) 11 September 2019 (2019-09-11)<br>See entire document. | 1-13 |
| A | KR 10-2018-0119254 A (LG CHEM, LTD.) 02 November 2018 (2018-11-02)<br>See entire document. | 1-13 |
| A | KR 10-2019-0065577 A (LG CHEM, LTD.) 12 June 2019 (2019-06-12)<br>See entire document. | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/020498**

| Patent document cited in search report | | | Publication date (day/month/year) | Patent family member(s) | | | Publication date (day/month/year) |
|---|---|---|---|---|---|---|---|
| KR | 10-2021-0029459 | A | 16 March 2021 | CN | 113826237 | A | 21 December 2021 |
| | | | | EP | 3961764 | A1 | 02 March 2022 |
| | | | | US | 2022-0223847 | A1 | 14 July 2022 |
| | | | | WO | 2021-045431 | A1 | 11 March 2021 |
| JP | 2020-187975 | A | 19 November 2020 | JP | 7217663 | B2 | 03 February 2023 |
| JP | 6574122 | B2 | 11 September 2019 | JP | 2017-064926 | A | 06 April 2017 |
| KR | 10-2018-0119254 | A | 02 November 2018 | CN | 110168782 | A | 23 August 2019 |
| | | | | CN | 115579457 | A | 06 January 2023 |
| | | | | EP | 3547411 | A1 | 02 October 2019 |
| | | | | EP | 3547411 | B1 | 09 August 2023 |
| | | | | JP | 2019-537224 | A | 19 December 2019 |
| | | | | JP | 2021-141081 | A | 16 September 2021 |
| | | | | KR | 10-2140127 | B1 | 31 July 2020 |
| | | | | US | 2020-0075939 | A1 | 05 March 2020 |
| | | | | WO | 2018-199505 | A1 | 01 November 2018 |
| KR | 10-2019-0065577 | A | 12 June 2019 | CN | 111386618 | A | 07 July 2020 |
| | | | | CN | 111386618 | B | 28 February 2023 |
| | | | | EP | 3667775 | A1 | 17 June 2020 |
| | | | | JP | 2020-532077 | A | 05 November 2020 |
| | | | | JP | 7048846 | B2 | 06 April 2022 |
| | | | | KR | 10-2305481 | B1 | 27 September 2021 |
| | | | | US | 11532810 | B2 | 20 December 2022 |
| | | | | US | 11735717 | B2 | 22 August 2023 |
| | | | | US | 2020-0274146 | A1 | 27 August 2020 |
| | | | | US | 2023-0076640 | A1 | 09 March 2023 |
| | | | | WO | 2019-112278 | A1 | 13 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220175729
- JP 2009080971 A